# EUROPÄISCHE PATENTSCHRIFT

(11) **EP 3 500 449 B1**
(45) Veröffentlichungstag und Bekanntmachung des Hinweises auf die Patenterteilung: **08.09.2021**
(21) Anmeldenummer: 17739239.6
(22) Anmeldetag: 06.07.2017
(51) Int. Cl.: B60L 53/12, H01F 38/14, H01F 27/28, H01F 27/255

(54) **ENERGIESPEICHEREINRICHTUNG ZUR BEREITSTELLUNG ELEKTRISCHER ENERGIE FÜR EINE ANTRIEBSVORRICHTUNG EINES KRAFTFAHRZEUGES UND KRAFTFAHRZEUG**
ENERGY STORAGE DEVICE FOR THE SUPPLY OF ELECTRIC ENERGY TO THE POWER TRAIN OF A MOTOR VEHICLE, AND MOTOR VEHICLE
DISPOSITIF D'ACCUMULATION D'ÉNERGIE POUR FOURNIR DE L'ÉNERGIE ÉLECTRIQUE AU GROUPE MOTOPROPULSEUR D'UN VÉHICULE AUTOMOBILE ET VÉHICULE AUTOMOBILE

(30) Priorität: 16.08.2016 DE 102016215285
(43) Veröffentlichungstag der Anmeldung: 26.06.2019
(73) Patentinhaber: Audi AG, 85045 Ingolstadt (DE)
(72) Erfinder: PEER, Reinhard, 85080 Gaimersheim (DE); GROSSHAUSER, Florian, 85309 Pörnbach (Puch) (DE); HARDT, Matthias, 85579 Neubiberg (DE)
(86) Internationale Anmeldenummer: PCT/EP2017/067046
(87) Internationale Veröffentlichungsnummer: WO 2018/033298

(56) Entgegenhaltungen:
- EP-A1- 2 804 290
- EP-A1- 2 849 313
- EP-A2- 2 800 111
- WO-A2-2008/051611
- WO-A2-2011/127455
- DE-B3-102015 003 643
- US-A1- 2014 015 329
- US-A1- 2014 327 391
- US-A1- 2015 170 833

## Beschreibung

Die Erfindung betrifft eine Energiespeichereinrichtung zur Bereitstellung elektrischer Energie für eine Antriebsvorrichtung eines Kraftfahrzeug, umfassend ein Gehäuse und wenigstens einen im Gehäuse aufgenommenen Energiespeicher.

Derartige Energiespeichereinrichtungen dienen bei vollständig oder teilweise elektrisch angetriebenen Kraftfahrzeugen der Bereitstellung elektrischer Energie für eine Antriebsvorrichtung des Kraftfahrzeugs. Die Energiespeichereinrichtung wird dabei aufgrund ihres großen Volumens häufig im Bereich des Unterbodens des Kraftfahrzeugs verbaut. Zum Laden der Energiespeichereinrichtung wurde bereits vorgeschlagen, induktive Energieübertragung zu nutzen, bei der durch eine in der Infrastruktur, beispielsweise einer Fahrbahn, angeordnete Energiequelle ein Magnetfeld erzeugt und im Kraftfahrzeug eine Spannung zum Laden des Energiespeichers induziert wird. Typischerweise werden dazu separate Sekundärspulen im Bereich der Vorderachse beziehungsweise des vorderen Hilfsrahmens des Kraftfahrzeugs angeordnet, nachdem große Teile des Unterbodens durch die Energiespeichereinrichtung selbst in Anspruch genommen werden.

Allerdings bietet der Bereich der Vorderachse beziehungsweise des vorderen Hilfsrahmens nur einen sehr geringen Bauraum, was eine dementsprechend geringe Größe der Sekundärspule nach sich zieht. Da die Performanz der induktiven Energieübertragung jedoch im Wesentlichen von der Spulenfläche, die für eine Kopplung mit der Energiequelle bereitsteht, abhängt, können nur verhältnismäßig geringe Leistungen für das Laden der Energiespeichereinrichtung bereitgestellt werden. Zudem sind zur Führung des magnetischen Flusses verwendete massive Ferritplatten oder -kacheln der Sekundärspulen sehr bruchempfindlich und müssen in massiven Gehäusen mechanisch geschützt gelagert werden.

Aus WO 2011/127455 A2 ist ein drahtloses Leistungsantennensystem zum Laden von elektrischen Energiespeichern in Fahrzeugen bekannt. Fahrzeugseitig kommt dabei eine an der Außenseite eines Batteriegehäuses angeordnete Antenneneinrichtung zum Einsatz.

In US 2014/327391 A1 und US 2014/015329 A1 wird jeweils ein System zum drahtlosen Übertragen von Energie an einen Energiespeicher eines Kraftfahrzeuges beschrieben. An einem Batteriegehäuse des kraftfahrzeugseitigen Energiespeichers ist dabei ein Ferritmaterial angeordnet, an welchem zwei Spulen als Empfänger für die an das Kraftfahrzeug übertragene Energie angeordnet sind.

DE 10 2015 003643 B3 offenbart ein Kraftfahrzeug mit einem Unterboden und einem oberhalb des Unterbodens angeordneten Energiespeicher, wobei das Kraftfahrzeug eine oder mehrere oberhalb des Unterbodens verlaufende Leitungen aufweist. Der Energiespeicher ist dabei auf einem flächigen Dämpfungselement angeordnet, an dem wenigstens eine kanalartige Durchbrechung zur Aufnahme einer der oberhalb des Unterbodens verlaufenden Leitungen vorgesehen ist.

Der Erfindung liegt daher die Aufgabe zugrunde, eine demgegenüber verbesserte und robustere Möglichkeit zum induktiven Laden einer Energiespeichereinrichtung eines Kraftfahrzeugs anzugeben.

Diese Aufgabe wird erfindungsgemäß durch eine Energiespeichereinrichtung nach Anspruch 1 und ein Kraftfahrzeug nach Anspruch 8 gelöst.

Die Erfindung beruht auf der Überlegung, die Fläche der Außenseite des Gehäuses der Energiespeichereinrichtung für eine Anbringung der sekundärseitigen Spuleneinrichtung nutzbar zu machen, indem die Spuleneinrichtung selbst an der Energiespeichereinrichtung angeordnet wird. Die Energiespeichereinrichtung kann dann derart im Kraftfahrzeug verbaut werden, dass die Spuleneinrichtung zum Fahrzeuguntergrund gerichtet ist und das externe Magnetfeld, welches beispielsweise von einer primärseitigen, im Fahrzeuguntergrund installierten Energiequelle bereitgestellt wird, zur Energieeinspeisung einkoppelbar ist. Im Kraftfahrzeug selbst muss also kein zusätzlicher Bauraum für eine separate Spuleneinrichtung vorgesehen sein. Vielmehr kann die gesamte Erstreckung der Außenseite des Gehäuses für die Energieeinspeisung genutzt werden. Die sekundärseitig effektiv zur induktiven Energieeinspeisung zur Verfügung stehende Fläche der Spuleneinrichtung ist mithin wesentlich größer als bei einer herkömmlichen Anordnung im Bereich der Vorderachse oder des vorderen Hilfsrahmens. Dies steigert die Performanz eines Ladevorgangs erheblich.

Die Energiespeichereinrichtung weist eine Ladeeinrichtung auf, welche zur Wandlung einer durch das Magnetfeld induzierten Spannung in eine zum Laden des Energiespeichers vorgesehene Spannungslage ausgebildet ist. Zusätzliche Vorteile der erfindungsgemäßen Energiespeichereinrichtung ergeben sich ferner, wenn das Gehäuse zumindest spuleneinrichtungsseitig magnetisch leitend ausgebildet ist, um das Magnetfeld gegen die Energiespeicher abzuschirmen. Die Energiespeichereinrichtung kann ferner eine Kühleinrichtung zum Kühlen der Energiespeicher aufweisen, welche zusätzlich bei der induktiven Energieeinspeisung entstehende Wärme der Spuleneinrichtung abführen kann.

Es wird bei der erfindungsgemäßen Energiespeichereinrichtung ferner bevorzugt, wenn die Spuleneinrichtung wenigstens eine zirkulare Leiterbahn aufweist, in welche eine Spannung durch das Magnetfeld induzierbar ist. Eine solche Leiterbahn verläuft typischerweise in einer Ebene und/oder beschreibt eine, insbesondere mehreckige, Spirale. Die Leiterbahn kann daher auch als Flachspule bezeichnet werden. Die Spuleneinrichtung kann dadurch mit Vorteil besonders dünn ausgebildet werden. Die Leiterbahn kann eine Dicke zwischen 0,5 mm und 3 mm, bevorzugt zwischen 0,8 mm und 1,2 mm, aufweisen und/oder eine Breite zwischen 10 mm und 40 mm, bevorzugt 16 mm und 24 mm, aufweisen. Der Leitungsquerschnitt der Leiterbahn beträgt bevorzugt zwischen 10 mm² und 40 mm², besonders bevorzugt zwischen 16 mm² und 24 mm². Zwischen zwei parallel verlaufenden Leiterbahnabschnitten besteht vorteilhafterweise ein Abstand zwischen 25 % und 100 %, insbesondere zwischen 40 und 60 %, der Breite der Leiterbahn. Die Außenabmessungen der Leiterbahn oder der Leiterbahnen betragen bevorzugt zwischen 500 x 500 mm² und 1200 x 1200 mm², besonders bevorzugt zwischen 700 x 700 mm² und 900 x 900 mm².

Um geeignete Leiterbahngeometrien mit ausreichendem Querschnitt und geringem Skineffekt zu realisieren, kann die Leiterbahn aus einem Kupferblech gebildet sein. Die Leiterbahn kann beispielsweise aus dem Kupferblech gestanzt sein. Alternativ oder zusätzlich kann die Leiterbahn aus einem Kupfergewebematerial gebildet sein. Ein solches Kupfergewebematerial ist beispielsweise in Form eines Kupfergewebebands für Massekabel bekannt.

Außerdem kann eine zweite Leiterbahn vorgesehen sein, welche gegenläufig zur ersten Leiterbahn geführt ist. Eine solche Leiterbahnanordnung wird auch als Doppel-D-Spule bezeichnet und erlaubt eine besonders effektive Einkopplung des Magnetfelds.

Es ist bei der erfindungsgemäßen Energiespeichereinrichtung ferner vorgesehen, dass die Spuleneinrichtung einen magnetisch leitfähigen Träger aufweist, über den sie am Gehäuse befestigt ist. Der Träger dient der Führung des durch das Magnetfeld erzeugten magnetischen Flusses, insbesondere in Richtung der Leiterbahn oder Leiterbahnen. Zweckmäßigerweise ist der Träger unmittelbar auf der Außenseite des Gehäuses angeordnet und insbesondere mit diesem bewegungsgekoppelt. Die Leiterbahn oder die Leiterbahnen können auf der dem Gehäuse gegenüberliegenden Seite des Trägers angeordnet sein. Es ergibt sich dann querschnittlich betrachtet ein schichtartiger Aufbau, umfassend das Gehäuses, gefolgt vom Träger und der darauf angeordneten Leiterbahn oder Leiterbahnen. Als magnetisch leitfähig ist grundsätzlich ein Material mit einer Permeabilitätszahl von wenigstens 2, bevorzugt wenigstens 5, aufzufassen. Typischerweise weist der Träger eine Dicke zwischen 5 mm und 15 mm, bevorzugt zwischen 7 und 12 mm, auf. Es ergibt sich mithin eine besonders flachbauende Spuleneinrichtung.

Der Träger ist erfindungsgemäß aus einem elastisch verformbaren Grundmaterial mit Beimengungen eines Ferrits gebildet. Es wird mithin vorgeschlagen, statt der herkömmlichen massiven Ferritkörper einen Träger vorzusehen, der derart elastisch verformbar ist, dass im Fahrbetrieb des Kraftfahrzeugs in den Träger eingeleitete Kräfte, insbesondere Torsionskräfte, bruchfrei durch diesen aufnehmbar sind. Da die erfindungsgemäße Energiespeichereinrichtung in den Unterboden, typischerweise zwischen in Fahrzeuglängsrichtung verlaufenden Karosseriestrukturen des Kraftfahrzeugs, verbaubar sein kann, kommt es zu erheblichen Krafteinträgen in das Gehäuse der Energiespeichereinrichtung, welche sich auf den darauf angeordneten Träger übertragen können. Diese Kräfte können insbesondere Stöße oder Verwindungen des Gehäuses beziehungsweise des mit ihm bewegungsgekoppelten Trägers sein. Durch das Vorsehen des elastisch verformbaren Trägers können diese Kräfte jedoch bruchfrei von diesem aufgenommen werden, so dass es keiner besonderen mechanisch geschützten Lagerung der Spuleneinrichtung, beispielsweise in massiven, großvolumigen Gehäusen, bedarf. Zusätzlich kann vorgesehen sein, dass die Beimengungen inhomogen im Grundmaterial verteilt sind, um den magnetischen Fluss an unterschiedlichen Stellen des Trägers unterschiedlich stark zu leiten beziehungsweise zu absorbieren.

Zweckmäßigerweise ist oder umfasst das Grundmaterial ein Elastomer. Als besonders vorteilhaft hat sich Hartgummi als Grundmaterial erwiesen.

In diesem Zusammenhang sei erwähnt, dass der elastisch verformbar Träger nicht notwendigerweise auf einen Einsatz bei einer erfindungsgemäßen Energiespeichereinrichtung beschränkt ist, das heißt, die diesbezügliche Lehre kann auch unabhängig von einer Anordnung eines solchen Trägers an einer Energiespeichereinrichtung zum Einsatz kommen. Die Erfindung kann daher auch ein Kraftfahrzeug betreffen, umfassend eine zur induktiven Energieeinspeisung durch ein externes Magnetfeld ausgebildete Spuleneinrichtung mit wenigstens einer Leiterbahn, in welche eine Spannung durch das Magnetfeld induzierbar ist, und einem magnetisch leitfähigen Träger für wenigstens eine Leiterbahn der Spuleneinrichtung, wobei der Träger aus einem elastisch verformbaren Grundmaterial mit Beimengungen einen Ferrits gebildet ist. Dabei lassen sich sämtliche Ausführungen zur erfindungsgemäßen Energiespeichereinrichtung auf dieses Kraftfahrzeug übertragen, so dass auch mit diesem die Vorteile der erfindungsgemäßen Energiespeichereinrichtung erzielt werden können.

Bei der erfindungsgemäßen Energiespeichereinrichtung kann ferner ein Schutzelement vorgesehen sein, welches zumindest die Spuleneinrichtung auf der dem Gehäuse gegenüberliegenden Seite überdeckt. Ein solches Schutzelement dient dem Unterfahrschutz der Energiespeichereinrichtung bei einem Einbau in den Unterboden eines Kraftfahrzeugs. Da derartige Schutzelemente ohnehin regelmäßig bei herkömmlichen Energiespeichereinrichtungen vorgesehen sind, kann die Spuleneinrichtung mithin in einem bestehenden Freiraum zwischen dem Gehäuse und dem Schutzelement angeordnet werden. Insbesondere im Hinblick auf die Integration der Energiespeichereinrichtung in den Unterboden des Kraftfahrzeugs kann das Schutzelement die gesamte Außenseite des Gehäuses überdecken. Das Schutzelement kann, insbesondere beabstandet von der Außenseite des Gehäuses, am Gehäuse befestigt sein. Alternativ oder zusätzlich kann das Schutzelement Befestigungsmittel aufweisen, mittels welcher es an der Fahrzeugkarosserie befestigbar ist.

Der Schutzelement ist zweckmäßigerweise aus einem diamagnetischen, paramagnetischen oder magnetisch neutralen Material gebildet oder umfasst ein solches Material. Mit anderen Worten ist das Material magnetisch schlecht leitend, das heißt, es weist z. B. eine Permeabilitätszahl kleiner als 1,1 auf. Das Schutzelement hat so nur einen geringen Einfluss auf die Induktionsvorgänge bei der Energieübertragung. Bevorzugt ist das Material ein faserverstärkter Kunststoff, insbesondere ein glasfaserverstärkter Kunststoff (GFK), oder umfasst einen solchen.

Daneben betrifft die Erfindung ein Kraftfahrzeug. Das erfindungsgemäße Kraftfahrzeug zeichnet sich dadurch aus, dass eine erfindungsgemäße Energiespeichereinrichtung vorgesehen ist. Sämtliche Ausführungen zur erfindungsgemäßen Energiespeichereinrichtung lassen sich analog das erfindungsgemäße Kraftfahrzeug übertragen, so dass auch mit diesem die zuvor genannten Vorteile erzielt werden können.

Die Energiespeichereinrichtung kann im Unterboden des Kraftfahrzeugs angeordnet sein und/oder sich zumindest abschnittsweise zwischen zwei Radachsen des Kraftfahrzeugs erstrecken. Mit anderen Worten kann die Energiespeichereinrichtung in der Fahrzeugmitte angeordnet sein. Insbesondere kann die Energiespeichereinrichtung zwischen sich in Fahrzeuglängsrichtung erstreckenden Karosseriestrukturen angeordnet sein. Die Energiespeichereinrichtung kann dabei selbst zur Karosseriestatik beitragen.

Weitere Vorteile und Einzelheiten der Erfindung ergeben sich aus den im Folgenden beschriebenen Ausführungsbeispielen sowie anhand der Zeichnungen. Diese sind schematische Darstellungen und zeigen:
- Fig. 1: eine Prinzipskizze des Unterbodens eines erfindungsgemäßen Kraftfahrzeugs mit einer erfindungsgemäßen Energiespeichereinrichtung;
- Fig. 2: einen Querschnitt durch einen Teilabschnitt der in Fig. 1 gezeigten Energiespeichereinrichtung;
- Fig. 3: eine Draufsicht auf Leiterbahnen der in Fig. 1 gezeigten Energiespeichereinrichtung; und
- Fig. 4: eine Draufsicht auf eine Leiterbahn einer erfindungsgemäßen Energiespeichereinrichtung eines weiteren erfindungsgemäßen Kraftfahrzeugs.

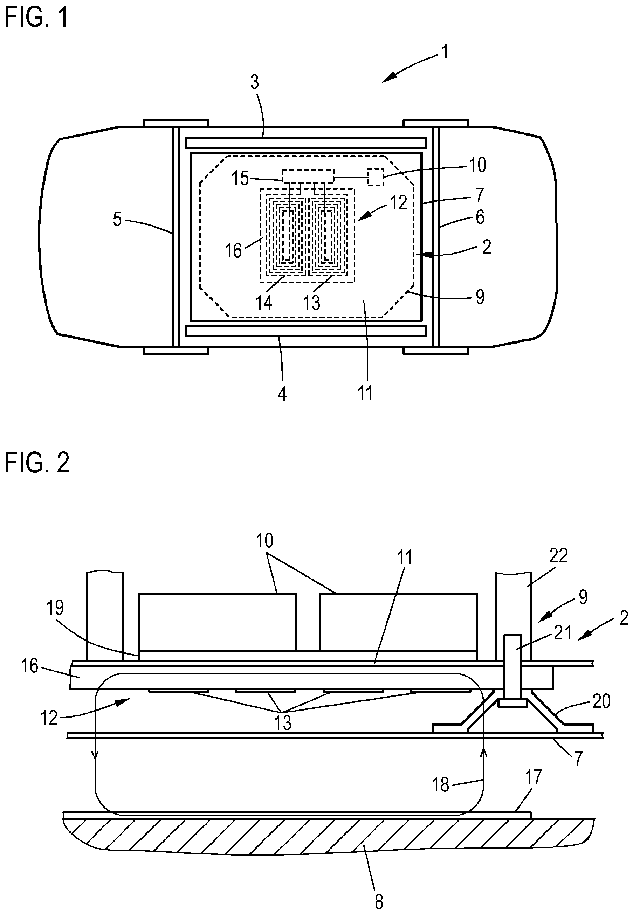

Fig. 1 zeigt eine Prinzipskizze des Unterbodens eines Kraftfahrzeugs 1 mit einer Energiespeichereinrichtung 2, die zwischen zwei in Fahrzeuglängsrichtung verlaufenden Karosseriestrukturen 3, 4 und zwei Radachsen 5, 6 - mithin in der Fahrzeugmitte - angeordnet ist.

Die Energiespeichereinrichtung 2 weist ein als Unterfahrschutz ausgebildetes Schutzelement 7 auf, welches die Energiespeichereinrichtung 2 zum Fahrzeuguntergrund 8 (vgl. Fig. 2) hin überdeckt. Aus fahrzeuguntergrundseitiger Sicht hinter dem Schutzelement 7 befinden sich ein Gehäuse 9 der Energiespeichereinrichtung 2, in dem mehrere Energiespeicher 10, von denen aus Gründen der Übersichtlichkeit in Fig. 1 lediglich ein einziger schematisch dargestellt ist, aufgenommen sind. Die Energiespeicher 10 sind beispielsweise Energiespeichermodule auf Lithium-Ionen-Basis, die zu elektrischen Versorgung einer nicht gezeigten Antriebseinrichtung des Kraftfahrzeugs 1 ausgebildet sind.

Auf einer zum Fahrzeuguntergrund 8 gerichteten Außenseite 11 des Gehäuses 9 ist eine Spuleneinrichtung 12 zur induktiven Energieeinspeisung durch ein kraftfahrzeugexternes Magnetfeld zum Laden der Energiespeicher 10 angeordnet. Die Spuleneinrichtung 12 weist eine zirkulare erste Leiterbahn 13 und eine dazu gegenläufig geführte, ebenfalls zirkulare zweite Leiterbahn 14 auf, die eine Doppel-D-förmige Leiterbahnanordnung bilden und mit einer Ladeeinrichtung 15 verbunden sind. Diese wandelt eine durch das Magnetfeld in die Leiterbahn 13, 14 induzierte Spannung in eine zum Laden der Energiespeicher 10 geeignete Spannungslage. Die Ladeeinrichtung 15 ist in der Energiespeichereinrichtung 2 angeordnet, wobei alternativ auch eine energiespeichereinrichtungsexterne Anordnung der Ladeeinrichtung 15 mit entsprechenden Schnittstellen zur Spuleneinrichtung 12 und zu den Energiespeichern 10 möglich ist.

Die Leiterbahnen 13, 14 sind auf einem magnetisch leitfähigen Träger 16 der Spuleneinrichtung 12 angeordnet, der wiederum unmittelbar an der Außenseite 11 des Gehäuses 9 befestigt ist. Der Träger 16 dient der Führung des magnetischen Flusses des induzierenden Magnetfeldes zu den Leiterbahnen 13, 14 und ist aus einem ein Elastomer, z. B. Hartgummi, mit Beimengungen eines Ferrits gebildet. Der Träger 16 ist durch die Beimengungen des Ferrits magnetisch leitend ausgebildet, das heißt sein Material weist eine Permeabilitätszahl von wenigstens 5 auf. Durch die Befestigung des Trägers 16 an der Außenseite 11 ist dieser mit dem Gehäuse 9 bewegungsgekoppelt, so dass auf das Gehäuse 9 während des Fahrbetriebs einwirkende Kräfte, insbesondere Stöße und Torsionskräfte, auch in den Träger 16 eingeleitet werden. Durch die Ausbildung des Trägers 16 aus dem elastisch verformbaren Elastomer können diese Kräfte im Vergleich zu herkömmlichen, starren Ferritplatten bruchfrei aufgenommen werden.

Das Schutzelement 7 ist aus einem diamagnetischen, paramagnetischen oder magnetisch neutralen Material, das heißt einem Material mit einer Permeabilitätszahl kleiner als 1,1, gebildet, beispielsweise aus einem glasfaserverstärkter Kunststoff. Der Schutzelement 7 hat daher nur einen geringen Einfluss auf das externe Magnetfeld und schützt sowohl die Energiespeichereinrichtung 2 als Ganzes und als auch die Spulenanordnung 12 vor Beschädigungen bei einem unterbodenseitigen Kontakt des Kraftfahrzeugs 1 mit Gegenständen.

Fig. 2 zeigt einen Querschnitt durch einen Teilabschnitt der Energiespeichereinrichtung 2 über dem Fahrzeuguntergrund 8, auf dem eine das Magnetfeld erzeugende Energiequelle 17 angeordnet ist. Es wird mithin ein induktives Energieübertragungssystem mit der primärseitigen Energiequelle 17 und der sekundärseitigen Spuleneinrichtung 12 zum Laden der Energiespeicher 10 gebildet.

Die Außenseite 11 des Gehäuses 9, der Träger 16 und die Leiterbahnen 13, 14, wovon in Fig. 2 lediglich Teile der ersten Leiterbahn 13 sichtbar ist, bilden eine Schichtstruktur, welche es ermöglicht einen durch den Feldlinienverlauf 18 dargestellten magnetischen Fluss von der Energiequelle 17 durch den Träger 16 zu den Leiterbahnen 13, 14 zu führen, und in diesen eine Spannung zu induzieren. Ersichtlich ist durch den Träger 16 das Innere des Gehäuses 9 gegen das Magnetfeld abgeschirmt. Mittels einer zusätzlichen Kühleinrichtung 19, welche mit den Energiespeichern 10 zu deren Kühlung thermisch gekoppelt ist, kann durch den Induktionsvorgang entstehende Wärme ebenfalls abgeführt werden.

Das Schutzelement 7 ist ersichtlich durch einen Abstandshalter 20 beabstandet von den Leiterbahnen 13, 14 an der den Energiespeichern 10 entgegengesetzten Seite des Gehäuses 9 angeordnet. Dazu durchsetzt ein Befestigungsmittel 21 den Abstandshalter 20 und den Träger 16 und haltert damit das Schutzelement 7 und die Spuleneinrichtung 12 an einem Gehäuseteil 22. Dabei sind mehrere Befestigungsmittel 21 über die gesamte Erstreckung der Spuleneinrichtung 12 und weitere nicht gezeigte Befestigungsmittel zur zusätzlichen Befestigung des Schutzelements 7 an den Karosseriestrukturen 3, 4 vorgesehen.

Bei dem Kraftfahrzeug 1 weisen das Gehäuse 9 im Bereich der Außenseite 11 eine Dicke von beispielsweise 2 mm und der Träger 16 eine Dicke von beispielsweise 8 mm auf. Die Leiterbahnen 13, 14 sind querschnittlich betrachtet beispielsweise 20 mm breit und 1 mm dick, so dass ein ausreichender Leiterquerschnitt von 20 mm² für eine effiziente Energieeinspeisung bei einem geringen Skineffekt gegeben ist. Parallel verlaufende Leiterbahnabschnitte der Leiterbahnen 13, 14 sind jeweils beispielsweise 10 mm voneinander beabstandet.

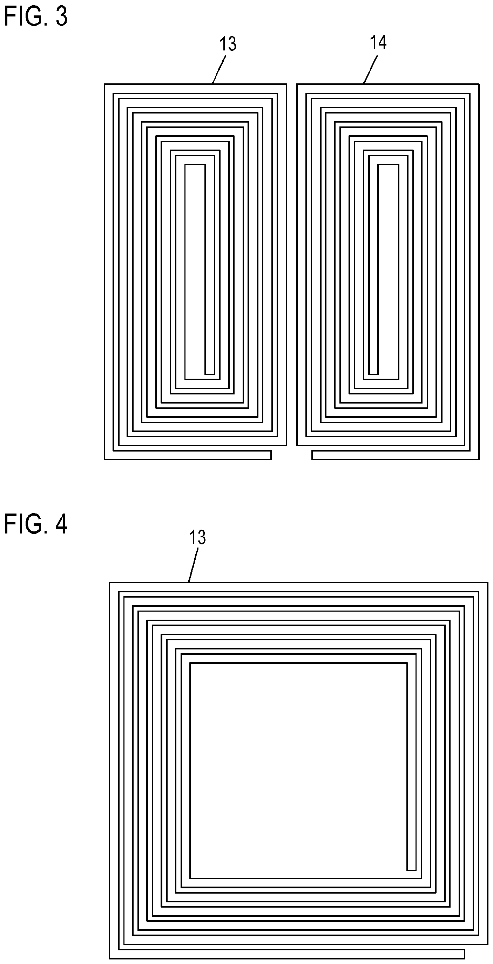

Fig. 3 zeigt eine Draufsicht auf die Leiterbahnen 13, 14 der Spuleneinrichtung 12. Jede Leiterbahn 13, 14 bildet eine ebene, zirkulare Spule zur Ausbildung der Doppel-D-Form. Beide Leiterbahn 13, 14 zusammen weisen Außenabmessungen von beispielsweise 800 x 800 mm² auf. Die Leiterbahnen 13, 14 sind jeweils aus einem Kupferblech gestanzt oder alternativ aus einem Kupfergewebeband gebildet.

Fig. 4 zeigt eine Leiterbahn 13 eines weiteren Ausführungsbeispiels eines Kraftfahrzeugs 1, welches dem zuvor beschriebenen entspricht, jedoch lediglich eine Leiterbahn 13 aufweist, die eine einzelne zirkulare Spule realisiert. Die Leiterbahn 13 weist Außenabmessungen von beispielsweise 800 x 800 mm² auf.

## Patentansprüche

1. Energiespeichereinrichtung zur Bereitstellung elektrischer Energie für eine Antriebsvorrichtung eines Kraftfahrzeugs, umfassend ein Gehäuse (9) und wenigstens einen im Gehäuse (9) aufgenommenen Energiespeicher (10), wobei eine Spuleneinrichtung (12) vorgesehen ist, welche zur induktiven Energieeinspeisung durch ein externes Magnetfeld zum Laden des Energiespeichers (10) ausgebildet und an einer Außenseite (11) des Gehäuses (9) angeordnet ist, wobei die Spuleneinrichtung (12) einen magnetisch leitfähigen Träger (16) aufweist, über den sie am Gehäuse (9) befestigt ist,
**dadurch gekennzeichnet,**
**dass** der Träger (16) aus einem elastisch verformbaren Grundmaterial mit Beimengungen einen Ferrits gebildet ist.

2. Energiespeichereinrichtung nach Anspruch 1,
**dadurch gekennzeichnet,**
**dass** die Spuleneinrichtung (12) wenigstens eine zirkulare Leiterbahn (13, 14) aufweist, in welche eine Spannung durch das Magnetfeld induzierbar ist.

3. Energiespeichereinrichtung nach Anspruch 2,
**dadurch gekennzeichnet,**
**dass** die Leiterbahn (13, 14) aus einem Kupferblech und/oder einem Kupfergewebematerial gebildet ist.

4. Energiespeichereinrichtung nach Anspruch 2 oder 3,
**dadurch gekennzeichnet,**
**dass** eine zweite Leiterbahn (14) vorgesehen ist, welche gegenläufig zur ersten Leiterbahn (13) geführt ist.

5. Energiespeichereinrichtung nach einem der vorangehenden Ansprüche,
**dadurch gekennzeichnet,**
**dass** das Grundmaterial ein Elastomer ist oder umfasst.

6. Energiespeichereinrichtung nach einem der vorhergehenden Ansprüche,
**dadurch gekennzeichnet,**
**dass** ein Schutzelement (7) vorgesehen ist, welches zumindest die Spuleneinrichtung (12) auf der dem Gehäuse (9) gegenüberliegenden Seite überdeckt.

7. Energiespeichereinrichtung nach Anspruch 6,
**dadurch gekennzeichnet,**
**dass** das Schutzelement (7) aus einem diamagnetischen, paramagnetischen oder magnetisch neutralen Material gebildet ist oder ein solches Material umfasst.

8. Kraftfahrzeug,
**dadurch gekennzeichnet,**
**dass** eine Energiespeichereinrichtung (2) nach einem der vorhergehenden Ansprüche vorgesehen ist.

9. Kraftfahrzeug nach Anspruch 8,
**dadurch gekennzeichnet,**
**dass** die Energiespeichereinrichtung (2) im Unterboden des Kraftfahrzeugs (1) angeordnet ist und/oder sich zumindest abschnittsweise zwischen zwei Radachsen (5, 6) des Kraftfahrzeugs (1) erstreckt.

## Claims

1. Energy storage apparatus for the supply of electric energy to the powertrain of a motor vehicle, comprising a housing (9) and at least one energy store (10) accommodated in the housing (9), wherein a coil apparatus (12) is provided which is configured for the inductive feeding of energy by means of an external magnetic field for charging the energy store (10) and is arranged on an outer side (11) of the housing (9), wherein the coil apparatus (12) has a magnetically conductive carrier (16) by means of which it is fixed to the housing (9),
**characterised in**
**that** the carrier (16) is formed of an elastically deformable basic material with the admixture of a ferrite.

2. Energy storage apparatus according to claim 1,
**characterised in**
**that** the coil apparatus (12) has at least one circular conductor path (13, 14) in which a voltage can be induced by the magnetic field.

3. Energy storage apparatus according to claim 2,
**characterised in**
**that** the conductor path (13, 14) is formed from a copper sheet and/or a copper mesh material.

4. Energy storage apparatus according to claim 2 or 3,
**characterised in**
**that** a second conductor path (14) is provided which is guided in the opposite direction to the first conductor path (13).

5. Energy storage apparatus according to any of the preceding claims,
**characterised in**
**that** the basic material is or includes an elastomer.

6. Energy storage apparatus according to any of the preceding claims,
**characterised in**
**that** a protective element (7) is provided which covers at least the coil apparatus (12) on the side situated opposite the housing (9).

7. Energy storage apparatus according to claim 6,
**characterised in**
**that** the protective element (7) is formed from a diamagnetic, paramagnetic or magnetically neutral material or includes one such material.

8. Motor vehicle,
**characterised in**
**that** an energy storage apparatus (2) is provided according to any of the preceding claims.

9. Motor vehicle according to claim 8,
**characterised in**
**that** an energy storage apparatus (2) is arranged in the underfloor of the motor vehicle (1) and/or extends at least in portions between two wheel axles (5, 6) of the motor vehicle (1).

## Revendications

1. Appareil de stockage d'énergie pour fournir de l'énergie électrique pour un dispositif d'entraînement moteur d'un véhicule automobile, comprenant un boîtier (9) et au moins un dispositif de stockage d'énergie (10) reçu dans le boîtier (9), dans lequel un appareil de bobine (12) est prévu, lequel est conçu pour l'apport inductif d'énergie par l'intermédiaire d'un champ magnétique externe pour la charge du dispositif de stockage d'énergie (10) et est disposé sur un côté extérieur (11) du boîtier (9), dans lequel l'appareil de bobine (12) présente un support (16) magnétiquement conducteur par l'intermédiaire duquel il est fixé au boîtier (9),
**caractérisé en ce que**
le support (16) est formé d'un matériau de base élastiquement déformable avec des adjonctions d'une ferrite.

2. Appareil de stockage d'énergie selon la revendication 1,
**caractérisé en ce que**
l'appareil de bobine (12) présente au moins une piste conductrice circulaire (13, 14), dans laquelle une tension peut être induite par l'intermédiaire du champ magnétique.

3. Appareil de stockage d'énergie selon la revendication 2,
**caractérisé en ce que**
la piste conductrice (13, 14) est formée d'une tôle de cuivre et/ou d'un matériau tissulaire de cuivre.

4. Appareil de stockage d'énergie selon la revendication 2 ou 3,
**caractérisé en ce qu'**
une seconde piste conductrice (14) est prévue, laquelle est guidée dans la direction opposée à la première piste conductrice (13).

5. Appareil de stockage d'énergie selon l'une quelconque des revendications précédentes,
**caractérisé en ce que**
le matériau de base est ou comprend un élastomère.

6. Appareil de stockage d'énergie selon l'une quelconque des revendications précédentes,
**caractérisé en ce qu'**
un élément de protection (7) est prévu, lequel recouvre au moins l'appareil de bobine (12) sur le côté opposé au boîtier (9).

7. Appareil de stockage d'énergie selon la revendication 6,
**caractérisé en ce que**
l'élément de protection (7) est formé d'un ou comprend un matériau diamagnétique, paramagnétique ou magnétiquement neutre.

8. Véhicule automobile,
**caractérisé en ce qu'**
un appareil de stockage d'énergie (2) est prévu selon l'une quelconque des revendications précédentes.

9. Véhicule automobile selon la revendication 8,
**caractérisé en ce que**
le appareil de stockage d'énergie (2) est disposé dans le dessous de caisse du véhicule automobile (1) et/ou s'étend au moins par sections entre deux essieux de roue (5, 6) du véhicule automobile (1).
